# EUROPEAN PATENT SPECIFICATION

(11) **EP 3 863 930 B1**
(45) Date of publication and mention of the grant of the patent: **19.06.2024**
(21) Application number: 19873958.3
(22) Date of filing: 26.09.2019
(51) Int. Cl.: B64D 31/04, B64D 31/10, G05D 1/00, B64D 31/14, B64C 13/18

(54) **SYSTEMS AND METHODS OF CONTROLLING ENGINES OF AN AIRCRAFT**
SYSTEME UND VERFAHREN ZUR STEUERUNG VON MOTOREN EINES FLUGZEUGES
SYSTÈMES ET PROCÉDÉS DE COMMANDE DE MOTEURS D'AÉRONEF

(30) Priority: 14.10.2018 IL 26242618
(43) Date of publication of application: 18.08.2021
(73) Proprietor: ISRAEL AEROSPACE INDUSTRIES LTD., 7010000 Lod (IL)
(72) Inventor: TAMIR, Alon, 2514700 Kfar Vradim (IL); GROS, Zvi, 4928343 Petach Tikva (IL)
(74) Representative: HGF
(86) International application number: PCT/IL2019/051065
(87) International publication number: WO 2020/079675

(56) References cited:
- EP-A2- 2 805 887
- US-A- 4 884 205
- US-A1- 2004 059 497
- US-A1- 2005 178 890
- US-A1- 2005 234 609
- US-A1- 2005 234 609
- US-A1- 2010 241 332
- US-A1- 2013 190 949
- US-A1- 2018 134 404
- US-B1- 8 918 235

## Description

### TECHNOLOGICAL FIELD

The invention is in the field of controlling an aircraft. In particular, the invention pertains, according to some embodiments, to control of engines of an aircraft.

### BACKGROUND

In a conventional multi-engine aircraft, a pilot controls a plurality of levers, wherein a position of each lever indicates a desired thrust (or power) for each one of the plurality of engines.

US 2013/190949 describes a system for controlling energy of a vehicle, for example an aircraft, comprising a control interface able to be in at least one first and one second state, the first state being an instruction state in which the interface generates at least a first instruction for speed of variation of a current energy of the vehicle and the second state being a resting state in which it gives no instruction, the interface furthermore being configured to return into the second state after having been brought into the first state.

US 2018/134404 describes a device for managing the mechanical energy of an aircraft, with a force application system on a control lever. The device includes a support defining a guide, a moving control lever for controlling varying a mechanical energy variation of the aircraft, mounted moving through the guide and at least one position sensor detecting the position of the moving lever in the guide, configured to create position information for the position of the moving lever in the guide intended to be sent to a flight control unit of the aircraft.

US 2005/234609 describes a system which includes a plurality of engines designed to generate a thrust of the aircraft, each of said engines being controlled by a first controllable actuator, a plurality of brakes designed to reduce the speed of the aircraft when it is taxiing, each of said brakes being controlled by a second controllable actuator, a control unit designed to generate a piloting setpoint which relates to the longitudinal behavior of the aircraft, and a central processing unit for automatically determining, from the piloting setpoint, a plurality of individual control commands which are applied automatically to the first and second actuators and which are used to satisfy the piloting setpoint, and a usage objective for the actuators. US 2005/178890 discloses a method of achieving or varying a thrust or power differential within an aircraft.

There is now a need to provide new systems and methods for controlling engines of a multi-engine aircraft.

### GENERAL DESCRIPTION

Systems and methods as described in the appended claims are provided.

According to some embodiments, the proposed solution improves efficiency and quality of control of engines of an aircraft.

According to some embodiments, the proposed solution provides simplification of control of an aircraft for a pilot. As a consequence, pilot's fatigue is reduced.

According to some embodiments, the proposed solution provides a better and safer handling of aircraft flight incidents, such as fire in engines, failure of engines, etc.

According to some embodiments, the proposed solution reduces the complexity of the intervention expected from a pilot during flight incidents.

According to some embodiments, the proposed solution increases automation of handling flight incidents which involve malfunction of one or more engines.

According to some embodiments, the proposed solution improves safety of flights.

According to some embodiments, the proposed solution improves control of aircraft whilst on the ground.

According to some embodiments, the proposed solution improves safety of aircraft during ground operations.

According to some embodiments, the proposed solution facilitates starting engines of the aircraft whilst on the ground.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
- **Fig. 1** illustrates an embodiment of a system for controlling a plurality of engines of an aircraft;
- **Fig. 1A** illustrates an embodiment of a single lever for controlling thrust of all engines of the aircraft;
- **Fig. 1B** illustrates an embodiment of a lever comprising a rotating element for inputting a command representative of a curvature of the trajectory of the aircraft;
- **Fig. 1C** illustrates an embodiment of an interface comprising different positions allowing handling normal and malfunction of an engine, such as a fire;
- **Fig. 2** illustrates a method of controlling engines of an aircraft using e.g. the system of **Fig. 1****;**
- **Fig. 3** describes another embodiment of a method for controlling engines of the aircraft, wherein one engine encounters a malfunction;
- **Fig. 4** describes an operation in which a yaw drift due to asymmetric propulsion is reduced;
- **Fig. 4A** describes another embodiment of a method for controlling engines of an aircraft, wherein one engine encounters a malfunction;
- **Fig. 4B** describes an embodiment of a method of starting one or more engines of the aircraft;
- **Fig. 5** describes an embodiment of a method for controlling a curvature of a trajectory of the aircraft whilst on the ground;
- **Fig. 6** describes an example of a rotation of a rotating member of a lever of the aircraft; and
- **Fig. 7** describes an embodiment of a method for controlling engines of an aircraft when at least one engine encounters a malfunction such as a fire.

### DETAILED DESCRIPTION OF EMBODIMENTS

In the following detailed description, numerous specific details are set forth in order to provide a thorough understanding of the invention. However, it will be understood by those skilled in the art that the presently disclosed subject matter may be practiced without these specific details. In other instances, well-known methods have not been described in detail so as not to obscure the presently disclosed subject matter.

Unless specifically stated otherwise, as apparent from the following discussions, it is appreciated that throughout the specification discussions utilizing terms such as "generating", "converting", "determining", "instructing", or the like, refer to the action(s) and/or process(es) of a processing unit that manipulates and/or transforms data into other data, said data represented as physical, such as electronic, quantities and/or said data representing the physical objects.

The term "processing unit" as disclosed herein should be broadly construed to include any kind of electronic device with data processing circuitry, which includes for example a computer processing device operatively connected to a computer memory (e.g. digital signal processor (DSP), a microcontroller, a field programmable gate array (FPGA), and an application specific integrated circuit (ASIC), etc.) capable of executing various data processing operations.

It can encompass a single processor or multiple processors, which may be located in the same geographical zone or may, at least partially, be located in different zones and may be able to communicate together.

The term "memory" as used herein should be expansively construed to cover any volatile or non-volatile computer memory suitable to the presently disclosed subject matter.

Embodiments of the presently disclosed subject matter are not described with reference to any particular programming language. It will be appreciated that a variety of programming languages may be used to implement the teachings of the presently disclosed subject matter as described herein.

The invention contemplates a computer program being readable by a computer for executing one or more methods of the invention. The invention further contemplates a machine-readable memory tangibly embodying a program of instructions executable by the machine for executing one or more methods of the invention.

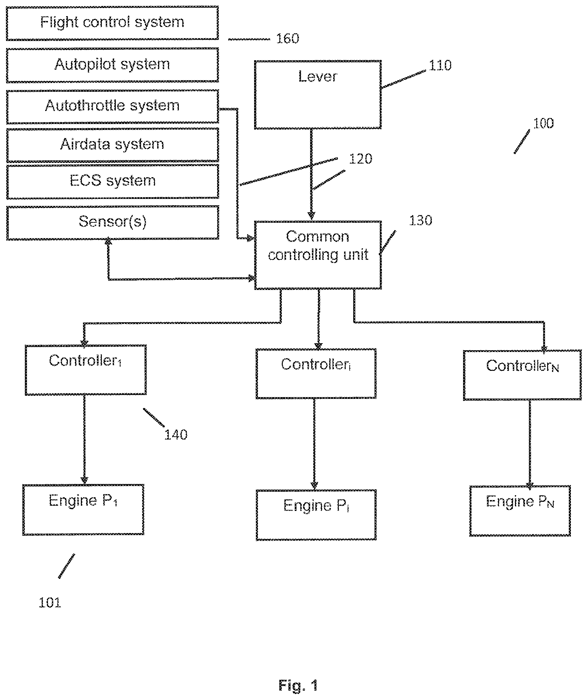

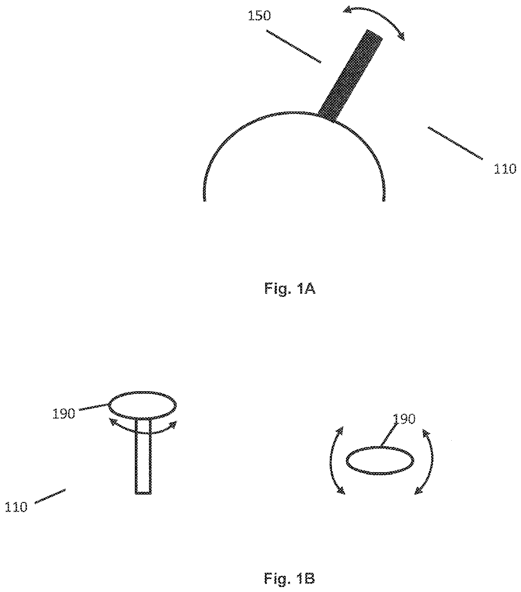

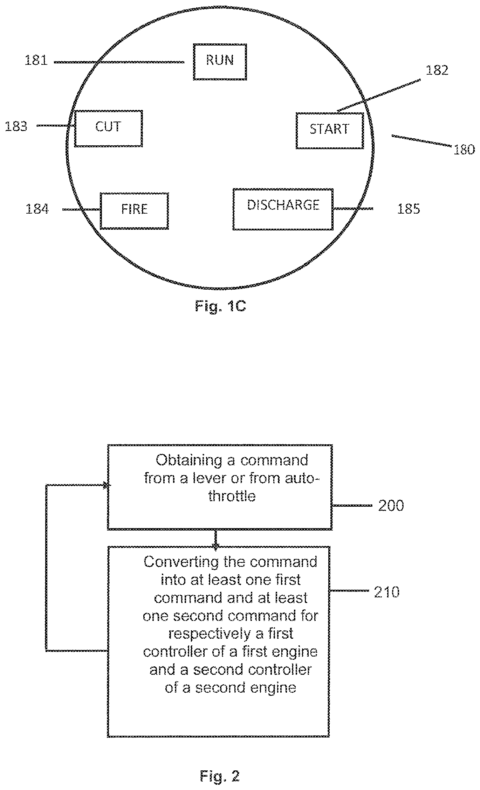

Attention is drawn to **Fig. 1****.**

**Fig. 1** depicts an embodiment of a system **100** for controlling a plurality of engines of an aircraft.

An engine can comprise e.g. a propeller, a turbo-propeller, a turbo-fan, a variable pitch propeller, an electrical engine, etc. This list is not limitative.

As shown, the aircraft comprises a plurality of engines **101** Pi, with i from 1 to N and N≥2.

According to some embodiments, the aircraft comprises at least one right engine (or a plurality of right engines) and at least one left engine (or a plurality of left engines). Right side and left side are generally defined with respect to a main axis of a body of the aircraft. This is not limitative and according to some embodiments, at least some of (or all) the engines are located on the axis of the body of the aircraft, or in the vicinity of this axis, or in any adapted location.

System **100** comprises an actuating element, such as a throttle or lever **110** controllable in particular by a pilot of the aircraft. In the following, it will be referred to a lever, but this is not limitative and other kinds of actuating elements controllable by a pilot can be used (different examples will be provided).

Depending on commands provided by the pilot on this lever **110,** and/or by thrust commands provided by an auto-throttle and/or auto-pilot of the aircraft, thrust of the plurality of engines can be controlled. In other words, the pilot indicates, using this lever **110,** a level of thrust desired for the engines of the aircraft.

Therefore, based on commands provided e.g. by the pilot, data representative of a thrust command is generated by the lever **110.** It has to be noted that data representative of a thrust command are also representative of a power command, since thrust and power of an engine are directly correlated.

Similarly, the auto-throttle can generate data representative of a thrust command based e.g. on inputs of a pilot (e.g. the pilot sets a desired speed, or thrust, if necessary with some additional parameters such as altitude, and the auto-throttle generates data representative of a thrust command which corresponds to the pilot's input). In some embodiments, the auto-throttle can modify a physical position of the lever **110** in accordance with the thrust command.

Lever **110** can control the thrust of all engines of the aircraft.

According to some embodiments, the system comprises a single lever **110** for controlling the positive thrust of all engines of the aircraft. In other words, the pilot provides a single thrust command (using this single lever) and controls positive thrust of all engines of the aircraft.

According to some embodiments, the system comprises a single lever **110** for controlling the positive thrust and the negative thrust of all engines of the aircraft. In other words, the pilot provides a single positive or negative thrust command (using this single lever) and controls positive or negative thrust of all engines of the aircraft. For example, when the pilot moves forward the lever, this will create a positive thrust command, and when the pilot moves backwards the lever, this will create a negative thrust command. This is however not limitative.

According to some embodiments, the system comprises a single lever **110** for controlling the positive thrust of all engines of the aircraft. In addition, a single sub-component of this single lever **110** (this can be e.g. a moving element present on the lever **110,** or when a negative thrust has to be created on ground, this can correspond to element **150** described hereinafter) can be used for controlling the negative thrust of all engines of the aircraft.

In other words, the pilot can provide a single positive thrust command using single lever **110** which controls positive thrust of all engines of the aircraft, and the pilot can provide a single negative thrust command using the above-mentioned sub-component which controls negative thrust of all engines of the aircraft.

According to some embodiments, the system comprises a single lever **110** for controlling the positive thrust of all engines of the aircraft, and another single lever (which can be distinct from the first lever) for controlling the negative thrust of all engines of the aircraft. In other words, the pilot can provide a single positive thrust command using a first single lever which controls positive thrust of all engines of the aircraft, and the pilot can provide a single negative thrust command using a second single lever which controls negative thrust of all engines of the aircraft.

According to some embodiments, data representative of a single thrust command is generated by the lever (or by a processing unit connected to the lever and suitable for translating the position of the lever into a thrust command), and based on this single thrust command, the thrust of all engines can be controlled.

According to some embodiments, and as shown in **Fig. 1A****,** a single movable element **150** of the lever **110** indicates the thrust desired by the pilot for the engines.

In other words, it is possible to control the thrust of the plurality of engines of the aircraft (in particular of all engines of the aircraft) with a single movable element **150.**

As already mentioned above, a lever is only a possible example of an actuating element which can be present in the aircraft for providing a thrust command. Other examples include a joystick, a graphical interface, a keyboard, an electronic button, an interface controllable by voice (etc.) with which the pilot can indicate a thrust level for the engines - in particular, according to some embodiments, a single thrust level can be indicated for all engines by the pilot using this actuating element (in some embodiments, a single actuating element controls positive and negative thrust of all engines, and in other embodiments, a single first actuating element controls positive thrust of all engines and a single second actuating element controls negative thrust of all engines).

As shown in **Fig. 1****,** a common controlling unit **130** of system **100** receives data representative of a thrust command **120** from the lever **110** and/or from the auto-throttle system of the aircraft.

The common controlling unit **130** is operable on a processing unit and can comprise in some embodiments data circuitry and a memory. In some embodiments, the common controlling unit **130** can include an embedded system (or unit) with one or more lanes. It can include an analog or digital input/output (I/O) interface. According to some embodiments, the common controlling unit **130** comprises complex hardware (e.g. FPGA, ASIC) or computer hardware (e.g. CPU, RAM, ROM).

As explained hereinafter in the specification, the common controlling unit **130** receives other commands from the pilot and/or the auto-pilot of the aircraft, such as a command representative of a curvature of the trajectory of the aircraft on ground.

As shown in **Fig. 1****,** the common controlling unit **130** can generate a plurality of commands, based at least on commands it receives from the lever **110** and/or the auto-throttle of the aircraft.

The common controlling unit **130** generates, based on data representative of a thrust command:
- at least one first command usable by a controller **140** of at least one first engine for controlling operation of said at least one first engine based at least on said first command; and
- at least one second command usable by a controller **140** of at least one second engine for controlling operation of said at least one second engine based at least on said second command.

For example, assume the aircraft comprises a right engine P1, controlled by a controller C1 and a left engine P2 controller by a controller C2.

The common controlling unit **130** can receive data representative of a thrust command from the lever **110** and can generate a first command for the controller C1 and a second command for the controller C2.

As explained hereinafter in the specification, the first command and the second command are generally also each representative of a thrust command.

The controller **140** of an engine is for example a FADEC (Full Authority Digital Engine), an "electronic engine controller" (EEC) or an "engine control unit" (ECU). This is however not limitative. A FADEC generally receives a position of the lever which represents a thrust level.

According to some embodiments, a single common controlling unit **130** can generate commands for all controllers of all engines of the aircraft.

According to some embodiments, the controller **140** (e.g. FADEC) converts a command received from the common controlling unit **130** into at least one command pertaining to engine operating parameters such as fuel flow, stator vane position, air bleed valve position, rotation speed of the fan, etc. In other words, the controller **140** can translate data representative of a thrust command received from the common controlling unit **130** into a command for the engine which ensures that the engine complies with the thrust command.

According to some embodiments, the controller **140** of an engine also controls and monitors engine starting and relighting.

The first command and the second command can be thrust commands generated by the common controlling unit **130** (based on the thrust command provided by the lever **110** or the auto-throttle).

The first command is transmitted to a first controller which converts it into a command pertaining to engine operating parameters for a first engine. The conversion can depend on various parameters, such as operability of the engines, parameters of the flight, etc.

Engine operating parameters of the first engine are selected such that resulting thrust/power of the first engine controlled by said first controller matches the first command (which is e.g. a thrust command). For example, appropriate rotation speed of the turbine, angle of attack of the blades, etc. are selected to match the thrust command (first command).

Similarly, the second command is transmitted to a second controller which converts it into a command pertaining to engine operating parameters for a second engine.

Engine operating parameters of the second engine are selected such that thrust/power of the second engine controlled by said second controller matches the second command (which is e.g. a thrust command).

According to some embodiments, a given controller can comprise multi-channels, in order to control multiple engines. In this case, each channel is dedicated to control engine operating parameters of a different engine. For example, a given controller can be assigned to control engine operating parameters of a plurality of engines located on the right side of the aircraft. In this case, the given controller will apply the command generated by the common controlling unit to the plurality of engines that it controls. This is however not limitative.

According to some embodiments, the common controlling unit **130** can communicate with various other systems **160** and exchange data with them. These systems **160** include at least one of:
- sensors of the aircraft (such as altitude sensor, pressure sensor, temperature sensor, fire detector, all engine parameters, etc.);
- flight control system of the aircraft (data such as data representative of flight phase, commands transmitted to flight actuators, etc. can be exchanged);
- autopilot system of the aircraft (data generated by the autopilot system can be exchanged);
- auto throttle system of the aircraft (data such as target speed, target thrust, etc., can be exchanged);
- air data system of the aircraft, and/or Air Data Inertial Reference Unit (data such as calibrated airspeed, Mach number, altitude, and altitude trend data, etc., can be exchanged);
- environmental control system (ECS) of the aircraft (data representative of e.g. air supply, thermal control and cabin pressurization for the crew and passengers, avionics cooling, smoke detection, etc., can be exchanged); and
- de-icing systems of the aircraft (e.g. of body, wing and engine nacelle) can also exchange data with the system.

The common controlling unit **130** can generate commands for the controllers **140** of the engines **101** based also on one or more of the data received from one or more of the systems **160** mentioned above. Various examples will be provided hereinafter.

According to some embodiments, the common controlling unit **130** stores in at least one memory one or more predefined operations to be applied for each of a plurality of predefined flight/ground scenarios (e.g. malfunction/failure of an engine, etc.). For each scenario, the common controlling unit **130** can execute these instructions in order to appropriately convert the commands communicated by the pilot via the lever **110,** or transmitted by the auto-throttle, into commands to be sent to the controllers **140** of the engines **101.**

According to some embodiments, the lever **110** comprises a rotating member. Therefore, a pilot of the aircraft can rotate this rotating member to control motion of the aircraft. As explained hereinafter in the specification, this rotating member can be used to control, in an efficient way, the aircraft on the ground along a non-linear trajectory, such as a curved trajectory, based on the rotation of this rotating member.

A non-limitative example is illustrated in **Fig. 1B****.** The lever **110** comprises a rotating member **190.** The rotating member **190** comprises e.g. a knob, a wheel, etc.

This rotating member **190** can be rotated around an axis parallel to the main axis of the lever **110.** A command representative of the rotation of the rotating member **190** can be generated by the lever **110** and transmitted to the common controlling unit **130.**

This example is not limitative and other configurations can be used for the rotating member.

In some embodiments, the pilot can provide a command representative of a curvature of the trajectory of the aircraft using another interface (such as a screen, a joystick, a voice command, etc.).

Attention is now drawn to **Fig. 1C****.**

According to some embodiments, system **100** can comprise, or can be connected to an additional interface **180.** This additional interface **180** can comprise:
- a run position **181,** indicating that the engine is running;
- a start position **182,** for starting the engine;
- a cut position **183,** for cutting off the engine, at least partially (this position is generally used for "normal" shutdown of an engine);
- a fire (or more generally "emergency") position **184,** usable for cutting off additional elements of the engine or in communication with the engine (this position can trigger an "emergency" shutdown of the engine); and
- a discharge position **185,** for triggering a security action.

According to some embodiments, the additional interface **180** can rotate. Depending on the angular position of the additional interface **180,** the corresponding action is activated (for example, when the interface **180** is rotated so that a predefined indicator of the interface is located at the "start" position **182,** the engine is started).

According to some embodiments, for each engine, there is such an additional interface **180.** Embodiments of methods which rely on this additional interface **180** will be described hereinafter.

Attention is now drawn to **Fig. 2****,** which describes a method of controlling engines of an aircraft using e.g. the system of **Fig. 1****.**

The method can comprise (operation **200**) obtaining a command from an actuating element controllable by a pilot, such as lever **110,** or from the auto-throttle system of the aircraft. This command transmitted by the lever can be generated e.g. by the lever, or a by a processing unit in communication with the lever, based e.g. on a level of displacement of the lever by the pilot.

This command is transmitted to the common controlling unit **130.**

This command can be representative of a thrust level desired by the pilot or auto-throttle for the engines **101.**

As mentioned, in some embodiments, a single thrust command is obtained based on a single input of the pilot, for all engines. The same can apply to the command of the auto-throttle, which can be a single thrust command for all engines of the aircraft.

The method can comprise converting (operation **210**), by the common controlling unit **130,** the received command into at least one first command and at least one second command. As explained hereinafter in the specification, the common controlling unit **130** can take into account various data in order to perform this conversion, such as:
- data representative of the state of the engines (e.g. normal operation, underperforming, partial failure, total failure, etc.);
- data representative of the flight conditions (altitude, temperature, pressure, speed, etc.);
- data representative of e.g. air supply, thermal control and cabin pressurization for the crew and passengers, avionics cooling, smoke detection, etc.;
- data sent by the autopilot system; and
- data sent by the auto throttle system, etc.

Assume the aircraft has two engines (right engine and left engine), or more. The first command can be computed so as to be received by a first controller **140** (e.g. FADEC) of the right engine, and the second command can be computed so as to be received by a second controller **140** (e.g. FADEC) of the left engine.

The first command can be e.g. a command representative of a thrust required for the right engine. Similarly, the second command can be e.g. a command representative of a thrust required for the left engine.

This can be applied for more than two engines. Depending on the number N of controllers **140** for this plurality of N' engines **101** (with N>2, N'>2), more than two commands can be generated for the controllers of these engines. Generally, N=N' and therefore the common controlling unit **130** generates N=N' commands. This is however not mandatory, and in some embodiments, N<N', and therefore the common controlling unit can generate N commands for N controllers controlling N' engines.

According to some embodiments, the first command and the second command are equal and substantially correspond to the thrust command provided by the lever **110** or the auto-throttle.

According to some embodiments, the first command and the second command can be different. Examples will be provided hereinafter, in which an asymmetric thrust is set for the engines **101,** although the pilot or the auto-throttle may have only provided a single thrust command for all engines.

According to some embodiments, the first command and/or the second command can be different from the command generated by the lever **110** based on the pilot input, or from the auto-throttle command. Examples will be provided hereinafter, in which the common controlling unit **130** generates a first and/or second command which is new and differs from the command **120** based on other data that it receives, such as level of operability of an engine, status of the aircraft, etc.

As already explained with respect to **Fig. 1****,** the controller **140** of each engine **101** can control the corresponding engine **101** based on the command it has received from the common controlling unit **130.**

Engine operating parameters such as fuel flow, stator vane position, air bleed valve position, rotation speed of the turbine, etc. can be controlled by the controller of each engine to reflect the thrust command it has received from the common controlling unit **130.**

During operation of the aircraft (e.g. on the ground and/or in flight) operations **200** and **210** can be repeated, depending e.g. on the actions of the pilot on the actuator of the system, on flight conditions, on possible malfunction of the engines, etc.

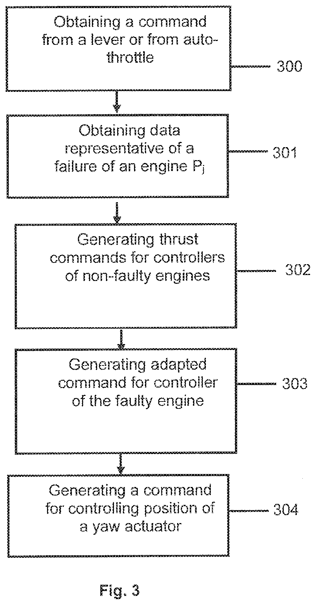

Attention is now drawn to **Fig. 3****,** which describes another embodiment of a method of controlling engines of the aircraft.

Operations depicted in **Fig. 3** are not necessarily performed in the order in which they are depicted. In addition, at least some of operations depicted in **Fig. 3** can be performed in parallel.

Assume the aircraft comprises engines P₁ to P_{N}, with N≥2.

The method can comprise obtaining (operation **300**) a command (data representative of a thrust command) from lever **110** controllable by a pilot, or from an auto-throttle. Operation **300** is similar to operation **200** above. This command can be transmitted to the common controlling unit **130.** In particular, a single thrust command can be transmitted to the common controlling unit **130** based on the pilot's input on lever **110,** or based on the instructions of the auto-throttle.

The method comprises obtaining (operation **301**), by the common controlling unit **130,** data representative of a malfunction and/or failure of at least one engine Pⱼ (with j a value between 1 and N). This data can be transmitted e.g. by the controller of the faulty engine Pⱼ, or by at least one sensor of the aircraft, or by a central processing unit of the aircraft, or by any other adapted system.

According to some embodiments, malfunction/failure of an engine can be classified into at least three categories:
- underperforming of the engine;
- partial failure of the engine;
- total failure of the engine.

Other classifications can be used.

As mentioned above, in the presented situation, the pilot provides a single thrust command (using the lever **110**) while at least one engine is faulty. The same can apply to the auto-throttle, which can send a common thrust command for all engines.

According to some embodiments, the common controlling unit **130** can generate command(s) usable by the respective controller(s) **140** of each engine Pi, with i from 1 to N being different from j.

In other words, the thrust command transmitted by the lever **110** or by the auto-throttle is converted into corresponding thrust commands for only the controllers **140** which control the non-faulty engines Pᵢ (i different from j).

According to some embodiments, assume the thrust command generated received by the common controlling unit **130** is equal to X, then the common controlling unit **130** can generate a thrust command substantially equal to X for only each of the controllers of the non-faulty engines. As a consequence, the non-faulty engines will have thrust which is substantially equal to the thrust command inputted by the pilot or sent by the auto-throttle.

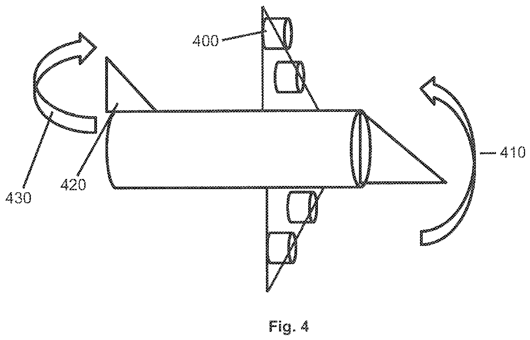

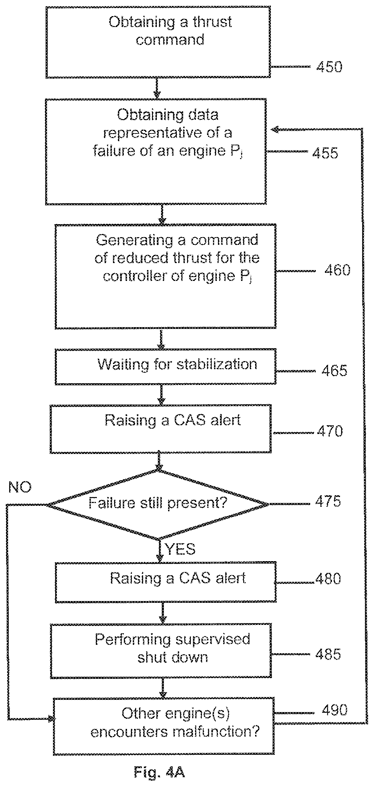

Concerning the faulty engine Pⱼ, the common controlling unit **130** can generate (see operation **303**) a thrust command to the controller of engine Pⱼ to instruct it e.g. to set a thrust of engine Pⱼ at a reduced level (which is lower than the thrust level requested by the pilot using the lever, or requested by the auto-throttle). A possible embodiment of such control will be described with reference to **Fig. 4A****.**

Therefore, although the pilot (or the auto-throttle) may provide a single thrust command, the common controlling unit **130** generates different thrust commands for the respective controllers of the engines, depending on the operability of the respective engines.

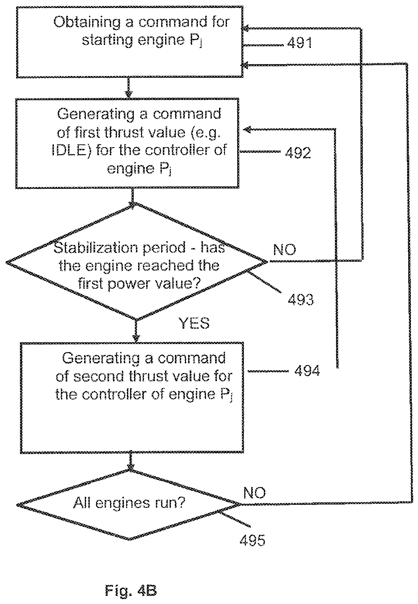

As shown in **Fig. 4****,** when at least one engine is faulty (see engine **400**), an asymmetric propulsion can be present in the aircraft, thereby generating a yaw drift (see arrow **410**).

According to some embodiments, an auto-pilot system of the aircraft can generate a yaw command for controlling position of a yaw actuator **420** of the aircraft, to compensate for the yaw drift caused by this failure.

According to some embodiments, the common controlling unit **130** (or another system of the aircraft, such as the auto-pilot) can generate (operation **304**) a yaw command for controlling position of a yaw actuator **420** of the aircraft, to compensate for the yaw drift caused by this failure. The yaw actuator **420** is for example a rudder of the aircraft, as depicted in **Fig. 4****.**

Yaw drift **410** is compensated for by displacement **430** of yaw actuator **420.**

According to some embodiments, the yaw command is computed, such as yaw drift is zero or below a threshold (which can be static, or dynamic).

According to some embodiments, a filter, such as a Kalman filter, present in the common controlling unit **130** can be used to determine the yaw command. The filter can receive data representative of the current yaw of the aircraft, data representative of the failure of the engine, and other flight data, in order to generate an appropriate yaw command.

According to some embodiments, the common controlling unit **130** can reduce the yaw drift by determining appropriate thrust commands for the non-faulty engines which compensate for this drift.

Assume the aircraft comprises N/2 right engines and N/2 left engines.

Assume one right engine is faulty. As a consequence, the propulsion provided by the left engines is higher than the propulsion provided by the right engines, thereby creating a yaw drift.

Assume the pilot (or the auto-throttle) has provided a thrust command which has a value of Y for the engines. The common controlling unit **130** can generate a thrust command equal to Y for the controllers of the right engines which are not faulty, and a thrust command equal to Y', with Y'< Y, for the controllers of the left engines which are not faulty, in order to reduce the asymmetric propulsion. Value of Y' is limited to the minimum thrust needed for the aircraft to fly in a safe manner.

This control can be performed in conjunction with the yaw command provided by the common controlling unit **130,** or independently from it.

With the method of **Fig. 4****,** the pilot can control the aircraft in a simpler way, since he does not need to take into account in his commands the fact that an engine is faulty and creates asymmetric propulsion. The common controlling unit **130** handles consequences of this failure independently. Safety of the flight is thus increased.

Attention is now drawn to **Fig. 4A** which describes an embodiment of a method of controlling engines of an aircraft, when at least one engine encounters malfunction and/or failure during flight of the aircraft.

Operations depicted in **Fig. 4A** are not necessarily performed in the order in which they are depicted. In addition, at least some of operations depicted in **Fig. 4A** can be performed in parallel.

Operation **450** comprises obtaining a command (such as a thrust or power command) from an actuating element (such as lever **110**) controllable by a pilot, or from an auto-throttle of the aircraft. Operation **450** is similar to operation **300** of **Fig. 3** and is not described again.

Operation **455** comprises obtaining data representative of a failure of at least one engine Pⱼ. When this data do not meet a safety threshold, this indicates that the failure exceeds a predetermined level, which requires taking a safety action.

For example, data representative of the fact that a temperature of the engine does not meet a safety threshold can be received (e.g. temperature can be higher than acceptable temperature, or can be lower than operating temperatures, etc.), thereby indicating that a failure is present in the engine.

In some embodiments, an alert can be received from the controller of the engine indicating that operating parameters of the engine do not meet a safety threshold and therefore are indicative of a possible failure of the engine.

Operation **460** can comprise generating by the common controlling unit **130** a thrust command for the controller of the faulty engine Pⱼ which is different from the thrust command inputted by the pilot or by the auto-throttle at operation **450.**

In particular, the common controlling unit **130** can instruct a controller of the faulty engine to reduce thrust of the faulty engine Pⱼ at a value which is lower than the thrust command provided by the pilot or the auto-throttle.

According to some embodiments, the common controlling unit **130** can instruct a controller of the faulty engine Pⱼ to set the faulty engine Pⱼ in an "IDLE" state, in which the thrust is reduced, but in which the engine Pⱼ is not yet shutdown.

This can be performed in order to avoid further deterioration of the engine's functioning, which could result in serious damage to the engine and/or to the aircraft.

According to some embodiments, operation **460** can be performed automatically by the common controlling unit **130,** with, or without requiring intervention of the pilot.

Once the thrust of the faulty engine Pⱼ is set at a reduced value, according to some embodiments, the method can comprise a waiting during a certain waiting period, such that thrust of the faulty engine Pⱼ stabilizes at this value (operation **465**).

According to some embodiments, the method can comprise (operation **470**) raising an alert for the pilot (such as a "*Crew-Alerting system*" alert - CAS alert). This alert can be raised e.g. to indicate to the pilot that one of the engines has encountered a failure.

Indeed, as mentioned above, operations **455, 460** and **465** can be in some embodiments performed without intervention of the pilot, and therefore the pilot needs to receive an alert that an engine is faulty (and that the thrust of this engine has been set at a reduced level), so that he is made aware of the situation.

According to some embodiments, the common controlling unit **130** can trigger such an alert, by sending a command to an alerting system (e.g. a display, a sound speaker, etc.) of the aircraft to raise a visual and/or audio alert. In other embodiments, another processing unit of the aircraft can trigger this alert, by sending a command to an alerting system of the aircraft to raise a visual and/or audio alert.

At this stage, if the pilot or the auto-throttle modifies the desired thrust for the engines, the common controlling unit **130** generates a corresponding command to the respective controllers of the non-faulty engines in order to obtain the thrust desired by the pilot or the auto-throttle, and sends a command to the controller of the faulty engine in order to maintain a reduced value for the thrust of this faulty engine.

At operation **475,** it can be checked whether failure of engine Pⱼ is still present. This verification can be performed e.g. after a certain waiting period, once thrust of the engine Pⱼ has stabilized at its reduced value.

According to some embodiments, this verification can be performed e.g. by checking if an alert indicative of a failure of the engine Pⱼ is still present.

According to some embodiments, this verification can be performed by checking if data representative of the engine Pⱼ still do not match a safety threshold.

If it is apparent that the failure has ceased, the method can comprise maintaining the engine at its reduced thrust value. Indeed, even if it is apparent that the failure has ceased, it cannot be assumed that the engine has returned to an operational state, and overcoming of the failure could be due to the fact that the thrust of the engine has been reduced. Therefore, for security reasons, thrust of the engine is maintained at a reduced value.

The method can further comprise operation **490,** in which it can be determined whether another engine has encountered a failure which requires taking safety actions. At least some of operations **460** to **485** can be repeated for this other engine. This process can be repeated several times, for each engine which is detected as faulty.

If the failure is still present, the method can comprise (operation **480**) raising a second alert (such as a "*Crew-Alerting system*" alert - CAS alert) to the pilot. This alert can be indicative of the fact that the failure of engine Pⱼ is still present.

According to some embodiments, the common controlling unit **130** can trigger this second alert, by sending a command to an alerting system of the aircraft for raising a visual and/or audio alert. In other embodiments, another processing unit of the aircraft can trigger this second alert, by sending a command to an alerting system of the aircraft for raising a visual and/or audio alert.

The method can comprise (operation **485**) performing a supervised shut-down of the faulty engine Pⱼ. Indeed, since the failure is still present, this can indicate that there is a risk that the engine may explode, cause internal damage to the engine, or cause damage to the aircraft. For safety reasons, it can be decided to shut down the engine, as explained hereinafter.

In operation **485,** upon instructions of the pilot, the faulty engine Pⱼ is shut down. According to some embodiments, the pilot can activate a shut-down interface of the faulty engine Pⱼ (such as a shut-down button specific to this engine) which sends a command to the controller of the engine for shutting down the engine. For example, the pilot can activate the "cut" position **183** present in the additional interface **180.**

According to some embodiments, a shut-down instruction of the engine is provided by the pilot and transmitted to the common controlling unit **130** which transfers this command to the controller of the faulty engine Pⱼ.

According to some embodiments, in order to avoid that the pilot inputs a shut-down instruction of an engine which is not faulty, the method can comprise verifying (e.g. by the common controlling unit **130**) that the shut-down instruction of an engine matches with the engine which is faulty. If there is a match, the method can comprise transferring the shut-down instruction (e.g. by the common controlling unit **130**), and if there is not a match, the method can comprise providing feedback to the pilot that his instruction does not comply with the current state of the engine, and ignoring the shut-down instruction of the pilot.

The method can further comprise operation **490,** in which it can be checked whether another engine has encountered a failure which requires taking safety actions. At least some of operations **460** to **485** can be repeated for this other engine. This process can be repeated several times, for each engine which is detected as faulty.

According to some embodiments, if at least one engine is detected as faulty and therefore its thrust is reduced (or in some cases its thrust is set to zero), an operation can be performed to avoid a yaw drift of the aircraft due to its asymmetric propulsion, as explained with respect to operation **304** in **Fig. 3****.**

Attention is now drawn to **Fig. 4B****.**

When the aircraft is on the ground, e.g. before take-off, the pilot generally needs to start each of the engines of the aircraft. In conventional aircraft, this process is performed by starting a first engine, setting its thrust to an IDLE state, and then to a higher thrust which is adapted to take-off. These operations are repeated for each engine, until all engines are operating at a thrust which is sufficient for take-off.

**Fig. 4B** describes a method of starting engines using the system of **Fig. 1****.**

According to some embodiments, the method can comprise operation **491,** in which a command is obtained which represents an instruction that engine Pⱼ has to be switched on. This command can be generated following an instruction of the pilot using an interface such as a switching button present in the aircraft and associated to this engine Pⱼ. For example, the "start" position **182** of the additional interface **180** can be activated.

This command can be obtained e.g. by the common controlling unit **130.**

As mentioned above, according to some embodiments (see e.g. **Fig. 1**), a single lever commands thrust/power of all engines. Therefore, it may occur that the lever is currently providing a thrust command whose level is adapted e.g. for taxi or take-off (if permitted for certain aircraft to take off without all engines running), and not for starting the engine. As mentioned above, an engine is generally switched on gradually, first at a thrust/power corresponding e.g. to an IDLE mode, and then at a higher thrust.

At operation **492,** following the instructions of the pilot to start engine Pⱼ, the common controlling unit **130** can generate a command for the controller of engine Pⱼ in order to increase thrust of the engine Pⱼ at a first thrust value (e.g. this can correspond to an IDLE mode).

In some embodiments, this first thrust value can be different from the thrust command provided by the lever. In particular, in some embodiments, the first thrust value can be lower than the thrust command provided by the lever.

This can be due to the fact that the pilot has already switched on another engine in preparation for take-off, and therefore had to increase, using the lever, thrust of this engine to a higher value than that of IDLE mode. In other words, although the single lever may have provided a thrust command which is not adapted for starting engine Pⱼ, the common controlling unit generates a different thrust command for the controller of engine Pⱼ, which is adapted for starting gradually engine Pⱼ.

After a stabilization period (see **493**), the method can comprise verifying if the engine has managed to reach the first thrust value. If this is the case, the method can comprise moving to operation **494.** If the engine did not manage to reach the first thrust value (e.g. because the engine is faulty), the method can comprise reverting back to operation **491,** in which an instruction to start another engine can be obtained.

In operation **494,** the common controlling unit **130** can instruct the controller of engine Pⱼ to set thrust of engine Pⱼ at a second thrust value which corresponds substantially to the thrust command of the lever. In other words, after the engine has been switched on and has stabilized at a first reduced thrust, the thrust of the engine is then increased to match with the thrust command provided by the actuator.

If all (non-faulty) engines run and have a thrust which matches with the thrust command provided by the lever, the method can stop operating. If at least one (non-faulty) engine has not yet been switched on, the method can revert back to operation **491,** in order to repeat the process for another engine Pₖ, with k being different from j. Operations which follow operation **491** can be repeated similarly for engine Pₖ.

These operations can be repeated until all (non-faulty) engines run and have a thrust which corresponds to the thrust command of the actuator.

In the embodiments above, examples have been described in which the common controlling unit **130** can generate a different thrust command than the one received from the pilot or auto-throttle. In some embodiments, the common controlling unit **130** can generate a thrust command which is higher than the thrust command provided by the single lever or by the auto-throttle. For example, the pilot can provide a reduced thrust command X during take-off of the aircraft (e.g. for reducing consumption of the engine, wherein X is less than the maximal thrust of the engine), and the common controlling unit **130** will generate a higher thrust command X'>X (for example if the engine is detected as faulty, and therefore, a higher thrust command should be provided to compensate for this malfunction).

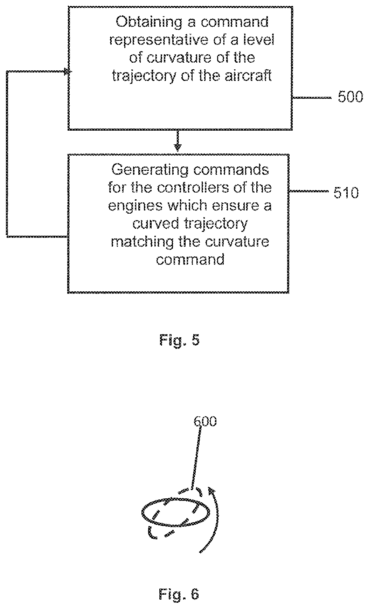

Attention is now drawn to **Fig. 5****.**

When the aircraft is on the ground (in "taxi" mode), it is sometimes necessary to make the aircraft follow a non-linear trajectory, such as a curved or bent trajectory.

In some embodiments, the lever **110** controllable by the pilot comprises an interface allowing the pilot to provide a command representative of a level of curvature of the trajectory which is desired by the pilot for the aircraft.

According to some embodiments, this interface corresponds to a rotating member of the lever **110** (as explained e.g. with reference to **Fig. 1B** above - see rotating member **190**). According to other embodiments, this interface can be a digital interface, such as a screen allowing the pilot to provide a command pertaining to the level of curvature of the trajectory of the aircraft.

According to some embodiments, the interface can communicate data with the common controlling unit **130** but is not necessarily physically located on lever **110,** and can be located in another place in the cockpit.

When the pilot rotates this rotating member (or uses another interface allowing inputting a command representative of the curvature of the trajectory of the aircraft), the lever **110** or the interface itself can generate a command (hereinafter "curvature command") correlated to the level of rotation, and which represents the level of curvature of the trajectory of the aircraft which is desired by the pilot.

The method can comprise obtaining (operation **500**), by the common controlling unit **130,** the curvature command. In some embodiments, this curvature command can be provided by the auto-pilot of the aircraft.

In some embodiments, a single interface (e.g. single rotating member) is present and provides a single curvature command. Based on this single curvature command, the system is able to provide a plurality of thrust commands adapted for each controller of each engine for matching this curvature command.

The method can comprise (operation **510**) generating, based on this curvature command, at least one first command usable by a controller of at least one right engine for controlling thrust of the right engine based at least on this first command, and at least one second command usable by a controller of at least one left engine for controlling thrust of the left engine based at least on this second command.

In particular, first command and second command can be selected to obtain thrust of the right engine and thrust of the left engine which cause the aircraft to follow a curved trajectory which matches the curvature command of the pilot (e.g. according to some matching criteria which indicates that the difference is below a predetermined threshold).

For example, assume the pilot has rotated the rotating member as shown in position **600** of **Fig. 6****.** This indicates that the aircraft has to bend its trajectory from right to left. As a consequence, the common controlling unit **130** can generate thrust commands for the controllers of the engines of the aircraft which induce an asymmetric propulsion, thereby ensuring that the aircraft will follow the bent trajectory.

For example, the common controlling unit **130** can generate a first thrust command for a controller of a right engine, and a second thrust command for a controller of a left engine, wherein the second thrust command is higher than the first thrust command, thereby making the aircraft bend its trajectory as desired by the pilot.

In particular, the difference between the first thrust command and the second thrust command can be determined in order to reflect the level of curvature required by the pilot (which depends e.g. on the level of rotation of the rotating member, or more generally on the curvature command).

If the pilot inputs a curvature command which corresponds to a straight trajectory (no curvature), then the common controlling unit **130** can transfer the thrust command of the lever **110** to each of the controllers of the engines so that their thrust will match the thrust command.

In some embodiments, assume the right engine and the left engine currently operate at the same thrust X, which is equal to the thrust command inputted by the pilot through lever **110.** Assume a curvature command is provided by the pilot in order to make the aircraft bend its trajectory.

The method can comprise making the thrust of the right and left engines vary around power X, in order to match the curvature command. For example, assume the curvature command indicates a left turn. Thrust of the right engine can be increased to X+ε and/or thrust of the left engine can be decreased to X-ε, wherein ε is calibrated to comply with the curvature command.

According to some embodiments, if one engine has been detected as faulty (see above various embodiments for detecting this faulty state), the common controlling unit **130** can take into account this information in order to compute the thrust required for the other engines to produce the desired curved trajectory.

For example, assume the pilot inputted a command to bend left, and that one of the right engines is faulty.

If the right engine was not faulty, it would be enough to maintain thrust of all left engines to X and to set thrust of all right engines to X+ε. However, since one of the right engines is faulty, this can be insufficient to obtain the desired curvature. Therefore, the common controlling unit **130** can generate a command so that thrust of all right engines is set to X+α, with α>>ε, in order to comply with the curvature command while a right engine is faulty.

This example is not limitative and other tuning of the thrust of the engines can be performed to match the level of curvature desired by the pilot.

This also applies to cases wherein the pilot inputs a command to follow a straight trajectory (no curvature) and one engine is detected as faulty. According to some embodiments, the common controlling unit **130** transmits a thrust command to each of the controllers of the non-faulty engines in order to compensate for the fact that at least one engine is faulty. For example, assume thrust command of the lever is X, that one right engine is faulty, and that the pilot desires a straight trajectory. According to some examples, thrust of left engines can be maintained to X, but thrust of the non-faulty remaining right engines can be increased to X+ε, in order to compensate for the presence of at least one faulty right engine.

In some embodiments, the lever **110** can provide both:
- a command representative of the level of curvature desired by the pilot (e.g. inputted by the pilot using a rotating member), and
- a command representative of the thrust desired by the pilot for the engines (e.g. inputted by the pilot using the lever), or sent by the auto-throttle.

In this case, the commands generated by the common controlling unit **130** for the controllers of the engines can be tuned to reflect, as much as possible, both the command representative of the level of curvature desired by the pilot and the command representative of the thrust desired by the pilot or the auto-throttle for the engines.

For example, assume the pilot inputs a thrust command of X, which is transmitted by the common controlling unit **130** to the non-faulty engines.

Assume that the pilot also inputs a command reflecting a given level of curvature for the trajectory of the aircraft, then the common controlling unit **130** can create an asymmetric power of the engines around thrust command X (e.g. X+ε for at least some of the engines in order to match the desired level of curvature), thereby reflecting both the thrust command and the command pertaining to the curvature of the trajectory of the aircraft.

In some embodiments, the common controlling unit **130** can provide a thrust command which corresponds to a negative forward thrust, for one or more engines of the aircraft (in this case, ε can be selected such as that X+ε is negative).

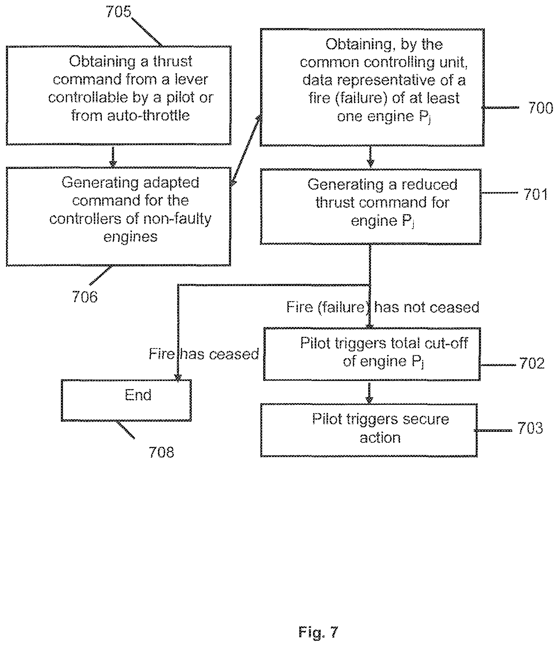

Attention is now drawn to **Fig. 7****,** which describes another embodiment of a method of controlling engines of the aircraft. The method of **Fig. 7** can be implemented using e.g. the system of **Fig. 1** and the additional interface **180.**

Operations depicted in **Fig. 7** are not necessarily performed in the order in which they are depicted. In addition, at least some of operations depicted in **Fig. 7** can be performed in parallel.

Assume the aircraft comprises engines P₁ to P_{N}, with N≥2.

The method can comprise obtaining (operation **700**), by the common controlling unit **130,** data representative of a fire of at least one engine Pⱼ. Although the method is described with respect to the presence of a fire, the method can be applied similarly to other failures that request a security action to be taken. Examples of failure include low oil pressure, presence of significant vibrations, etc.

This data can be sent e.g. by at least one controller of the engine Pⱼ, or by at least one sensor of the aircraft, or by at least one sensor operatively connected with the engine, or by a central processing unit of the aircraft, or by any other adapted system.

According to some embodiments, the common controlling unit **130** can instruct (operation **701**) a controller of the faulty engine Pⱼ to set the faulty engine Pⱼ in an "IDLE" state, in which the thrust is reduced, but in which the engine Pⱼ is not yet totally turned off. This can be performed automatically, without intervention of the pilot.

Since the common controlling unit **130** independently sends an appropriate command to the correct controller controlling this specific engine under fire, error by the pilot is avoided (such as deactivation by the pilot of an operational engine, instead of a faulty engine).

The common controlling unit **130** can monitor the failure (e.g. fire) present in the engine, and, if after a predetermined duration, the failure is still present, it can trigger an alarm to the pilot. According to some embodiments, a visual alarm and/or an audio alarm can be triggered. According to some embodiments, triggering of the alarm is not performed by the common controlling unit **130,** and can be performed by another system of the aircraft. At this stage, the fire is still being monitored and has not yet been handled.

If the fire has ceased after the predetermined duration, the method can end (operation **708**). The fact that the fire has ceased can be known e.g. by receiving new data from the system which detected the fire (this new data can be received e.g. by the common controlling unit **130**), which indicates that the fire has ceased, or in some cases, by a visual inspection of the team crew.

If the fire has not ceased after the predetermined duration, the pilot can activate (operation **702**) the "fire" (or more generally "emergency") position **184** of the interface **180,** which cuts off additional elements of the engine Pⱼ or in communication with the engine Pⱼ (such as fuel and hydraulic supply, etc. - this corresponds to an emergency shutdown). In some embodiments, the common controlling unit **130** can control that the pilot has deactivated the correct engine Pⱼ, and if the pilot deactivates another engine, the common controlling unit **130** can ignore this command, to avoid an error. A corresponding alarm can be raised for the pilot.

In some embodiments, the common controlling unit **130** can activate by itself the "fire" (or more generally "emergency") position **184.**

In addition, the pilot can activate the discharge position **185** of the interface **180** for triggering a security action.

As a consequence of activation of the discharge position **185** of the interface **180,** a security action can be triggered for handling the fire. For example, a firefighting agent (e.g. a powder) can be thrown from a firefighting device located in the vicinity of the engine, in order to extinguish the fire.

In some embodiments, the common controlling unit **130** can control that the pilot has ordered a security action for the correct engine Pⱼ, and if the pilot has ordered this security action for another engine, the common controlling unit **130** can ignore this command, to avoid an error. A corresponding alarm can be raised for the pilot.

As shown in **Fig. 7****,** according to some embodiments, the system can receive thrust commands from the pilot (operation **705**) while attempting to perform operations to handle a fire (or another failure) in at least one engine of the aircraft.

For example, even if an alarm pertaining to a fire has been received by the common controlling unit **130,** the pilot can still provide thrust commands using the lever **110** (the same applies to the auto-throttle).

The common controlling unit **130** can convert this command into commands which are adapted for each controller of each engine, as explained in the various embodiments above (operation **706**).

In particular, the common controlling unit **130** can generate thrust commands which comply with the pilot input or the auto-throttle input for the non-faulty engines, and can generate a command which reduces the thrust of the faulty engine as explained in operation **701.**

According to some embodiments, if the aircraft is on the ground, and data representative of a fire has been received for a given engine, the system can behave, with respect to commands pertaining to the curved trajectory of the aircraft on the ground, as explained in the embodiment described with reference to **Fig. 5** when one engine is faulty (that is to say that the common controlling unit **130** will take into account that one engine is faulty and will generate appropriate thrust commands for the non-faulty engines so that the total thrust allows the aircraft to follow the desired non-linear trajectory).

It is to be noted that the various features described in the various embodiments may be combined according to all possible technical combinations.

It is to be understood that the invention is not limited in its application to the details set forth in the description contained herein or illustrated in the drawings. The invention is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the presently disclosed subject matter.

Those skilled in the art will readily appreciate that various modifications and changes can be applied to the embodiments of the invention as hereinbefore described without departing from its scope, defined in and by the appended claims.

## Claims

1. A system (100) for controlling a plurality of engines (101) of an aircraft, wherein said plurality of engines (101) comprises at least one first engine of the aircraft and at least one second engine of the aircraft, the system comprising:
a common controlling unit (130) configured to operate a conversion of data representative of a thrust command (120) transmitted by at least:
(i) a single actuating element (110) operative to control thrust of all of the plurality of engines of the aircraft, said actuating element being controllable by a pilot or by an auto-throttle of the aircraft, or
(ii) at least one of a single actuating element operative to control positive thrust of all of the plurality of engines of the aircraft, said actuating element being controllable by a pilot, and a single actuating element operative to control negative thrust of all of the plurality of engines of the aircraft,
said actuating element being controllable by a pilot, into:
**(a)** at least one first command usable by a controller (140) of said at least one first engine for controlling operation of said at least one first engine based at least on said first command, and
**(b)** at least one second command usable by a controller (140) of said at least one second engine for controlling operation of said at least one left engine based at least on said second command,
the system being **characterized in that**, said common controlling unit (130) is operable to perform said conversion based at least on data representative of a level of operability of each of the at least first and second engine (101) determined during operation of the aircraft, thereby making each of the at least first and second engine (101) to either comply with said thrust command or to operate differently from said thrust command, based at least on its level of operability during operation of the aircraft, wherein, when the common controlling unit (130) receives data representative of a malfunction and/or a failure of one given engine of the at least first and second engines, the 30 common controlling unit (130) is configured to:
- generate (302, 706) a command usable by the controller (140) of the engine different from the given engine for controlling thrust of said engine, wherein said thrust is controlled in accordance with said data representative of the thrust command received by said common controlling unit (130), or
- instruct (303, 460, 701) the controller (140) of the given engine to reduce thrust of the given engine at a first thrust value, wherein the first thrust value is lower than said thrust command.

2. The system of claim 1, wherein at least one of (i) and (ii) is met:
(i) the data representative of the thrust command includes a single thrust command for all of the plurality of engines of the aircraft;
(ii) said first command and said second command each substantially match said thrust command.

3. The system of claim 1, configured to generate (304) a command for controlling position of a yaw actuator (420) of the aircraft, to compensate a yaw drift (410) caused by a failure of the at least one given engine.

4. The system of any of claims 1 to 3, wherein the plurality of engines comprises engines P₁ to P_{N}, with N≥2, wherein the common controlling unit (130) is configured to, upon receipt of a command instructing to turn on engine Pⱼ:
- instruct (492) a controller (140) of said engine Pⱼ to increase thrust of engine Pⱼ at a first thrust value, wherein said first thrust value differs from the thrust command; and
- after a stabilization period, instruct (494) said controller (140) of said engine Pⱼ to set thrust of engine Pⱼ at a second thrust value which substantially matches said thrust command.

5. The system of any of claims 1 to 4, comprising, for each engine, an interface (180) comprising:
- a security action position (185), which, upon activation, is configured to trigger a security action for handling a failure present in said engine,
- a start position (182), which, upon activation, is configured to start said engine, and
- a cut (183) or emergency (184) position, which, upon activation, turns off said engine, partially or totally.

6. The system of any of claims 1 to 5, comprising an interface (190) operable to communicate data with the common controlling unit (130) and allowing inputting a command representative of a curvature of a trajectory of the aircraft on the ground.

7. The system of claim 6, wherein, upon input of a command through said interface (190), the common controlling unit (130) is configured to generate:
- at least one first command usable by a controller (140) of at least one right engine for controlling thrust of said at least one right engine in compliance with said first command, and
- at least one thrust command usable by a controller (140) of at least one left engine for controlling thrust of said at least one left engine in compliance with said second command,
wherein thrust of said at least one right engine and thrust of said at least one left engine are selected to make the aircraft follow a curved trajectory which complies with said curvature.

8. A system for controlling a plurality of engines (101) of an aircraft, wherein said plurality of engines comprises at least one right engine and at least one left engine, the system being **characterized in that** it comprises:
- a single interface (110, 190, 600) operable by a pilot to provide a single curvature command representative of a curvature of a trajectory of the aircraft on the ground,
- a common controlling unit (130) configured to:
o generate at least one first command usable by at least one controller (140) of said at least one right engine for controlling thrust of said at least one right engine based at least on said first command, and
o generate at least one second command usable by at least one controller (140) of said at least one left engine for controlling thrust of said at least one left engine based at least on said at least one second command,
wherein said first command and said second command are selected such that thrust of said at least one right engine and thrust of said at least one left engine allow the aircraft to follow a curved trajectory representative of said single curvature command provided on said interface.

9. A method of controlling a plurality of engines of an aircraft, wherein said plurality of engines comprises at least one first engine of the aircraft and at least one second engine of the aircraft, the method comprising:
- obtaining (200, 300, 405) data representative of a thrust command for said plurality of engines, transmitted by at least:
(i) a single actuating element (110) operative to control thrust of all of the plurality of engines (101) of the aircraft, said actuating element being controllable by a pilot or by an auto-throttle of the aircraft, or
(ii) at least one of a single actuating element operative to control positive thrust of all of the plurality of engines (101) of the aircraft, said actuating element being controllable by a pilot, and a single actuating element operative to control negative thrust of all of the plurality of engines of the aircraft, said actuating element being controllable by a pilot,
- operating a conversion (210), by a common controlling unit (130), said data representative of the thrust command into:
o at least one first command usable by a controller (140) of said at least one first engine (101) for controlling operation of said at least one first engine based at least on said first command, and
o at least one second command usable by a controller (140) of said at least one second engine (101) for controlling operation of said at least one second engine based at least on said second command,
wherein said conversion is performed based at least on data representative of a level of operability of each of the at least first and second engine (101) determined during operation of the aircraft, thereby making each of the at least first and second engine to either comply with said thrust command or to operate differently from said thrust command, based at least on its level of operability during operation of the aircraft,
wherein the method further comprises:
- receiving (301, 455) data representative of a malfunction and/or a failure of one given engine of the at least first and second engine, and
o generating (302, 706) a command usable by the controller (140) of the engine different from the given engine for controlling thrust of said engine, wherein said thrust is controlled in accordance with said data representative of the thrust command received by said common controlling unit, or
o instructing (303, 460, 701), by the common controlling unit (130), the controller (140) of the given engine to reduce thrust of the given engine at a first thrust value, wherein the first thrust value is lower than said thrust command.

10. The method of claim 9, wherein at least one of (i) and (ii) is met:
(i) the data representative of the thrust command includes a single thrust command for all of the plurality of engines (101) of the aircraft;
(ii) said first command and said second command each substantially match said thrust command.

11. A method of controlling a plurality of engines of an aircraft, wherein said plurality of engines comprises at least one right engine and at least one left engine, the method comprising:
- obtaining, from a single interface (110, 190, 600) operable by a pilot, a single curvature command representative of a curvature of a trajectory of the aircraft on the ground,
- based on said single curvature command, generating, by a common controlling unit (130),
o at least one first command usable by at least one controller (140) of said at least one right engine for controlling thrust of said at least one right engine based at least on said first command, and
o at least one second command usable by at least one controller (140) of said at least one left engine for controlling thrust of said at least one left engine based at least on said at least one second command,
wherein said first command and said second command are selected such that thrust of said at least one right engine and thrust of said at least one left engine allow the aircraft to follow a curved trajectory representative of said single curvature command.

12. A non-transitory storage device readable by a machine, tangibly embodying a program of instructions executable by the machine to perform the method of claim 9 or of claim 11.

## Patentansprüche

1. System (100) zum Steuern einer Vielzahl von Motoren (101) eines Flugzeugs, wobei die Vielzahl von Motoren (101) zumindest einen ersten Motor des Flugzeugs und zumindest einen zweiten Motor des Flugzeugs umfasst, wobei das System Folgendes umfasst:
eine gemeinsame Steuereinheit (130), die konfiguriert ist, um eine Umwandlung von Daten zu bedienen, die repräsentativ für einen Schubbefehl (120) sind, übertragen durch zumindest:
(i) ein einzelnes Betätigungselement (110), das bedienbar ist, um Schub von allen aus der Vielzahl von Motoren des Flugzeugs zu steuern, wobei das Betätigungselement durch einen Piloten oder durch eine automatische Drosselung des Flugzeugs steuerbar ist, oder
(ii) zumindest eines von einem einzelnen Betätigungselement, das bedienbar ist, um positiven Schub von allen aus der Vielzahl von Motoren des Flugzeugs zu steuern, wobei das Betätigungselement durch einen Piloten steuerbar ist, und einem einzelnen Betätigungselement, das bedienbar ist, um negativen Schub von allen aus der Vielzahl von Motoren des Flugzeugs zu steuern, wobei das Betätigungselement durch einen Piloten steuerbar ist, in:
**(a)** zumindest einen ersten Befehl, der durch eine Steuerung (140) des zumindest einen ersten Motors verwendbar ist, um Bedienung des zumindest einen ersten Motors basierend zumindest auf dem ersten Befehl zu steuern, und
**(b)** zumindest einen zweiten Befehl, der durch eine Steuerung (140) des zumindest einen zweiten Motors verwendbar ist, um Bedienung des zumindest einen linken Motors basierend zumindest auf dem zweiten Befehl zu steuern,
wobei das System **dadurch gekennzeichnet ist, dass**
die gemeinsame Steuereinheit (130) bedienbar ist, um die Umwandlung basierend zumindest auf Daten durchzuführen, die repräsentativ für ein Niveau an Bedienbarkeit von jedem von dem zumindest ersten und zweiten Motor (101) sind, die während Bedienung des Flugzeugs bestimmt werden, wodurch jeder von dem zumindest ersten und zweiten Motor (101) dazu gebracht wird, entweder den Schubbefehl zu befolgen oder anders als der Schubbefehl bedient zu werden, basierend zumindest auf seinem Niveau an Bedienbarkeit während Bedienung des Flugzeugs,
wobei, wenn die gemeinsame Steuereinheit (130) Daten empfängt, die repräsentativ für eine Fehlfunktion und/oder einen Ausfall eines gegebenen Motors von dem zumindest ersten und zweiten Motor sind, die gemeinsame Steuereinheit (130) zu Folgendem konfiguriert ist:
- Erzeugen (302, 706) eines Befehls, der durch die Steuerung (140) des Motors verwendbar ist, der sich von dem gegebenen Motor unterscheidet, um Schub des Motors zu steuern,
wobei der Schub gemäß den Daten gesteuert wird, die repräsentativ für den Schubbefehl sind, der durch die gemeinsame Steuereinheit (130) empfangen wird, oder
- Anweisen (303, 460, 701) der Steuerung (140) des gegebenen Motors, Schub des gegebenen Motors bei einem ersten Schubwert zu reduzieren, wobei der erste Schubwert niedriger als der Schubbefehl ist.

2. System nach Anspruch 1, wobei zumindest eines von (i) und (ii) erfüllt ist:
(i) die Daten, die repräsentativ für den Schubbefehl sind, beinhalten einen einzelnen Schubbefehl für alle aus der Vielzahl von Motoren des Flugzeugs;
(ii) der erste Befehl und der zweite Befehl stimmen jeweils im Wesentlichen mit dem Schubbefehl überein.

3. System nach Anspruch 1, das konfiguriert ist, um einen Befehl zum Steuern der Position eines Gieraktors (420) des Flugzeugs zu erzeugen (304), um eine Gierdrift (410) auszugleichen, die durch einen Ausfall des zumindest einen gegebenen Motors verursacht wird.

4. System nach einem der Ansprüche 1 bis 3, wobei die Vielzahl von Motoren die Motoren P₁ bis P_{N}, umfasst, wobei N≥2, wobei die gemeinsame Steuereinheit (130) bei Empfang eines Befehls, der anweist, Motor Pⱼ einzuschalten, zu Folgendem konfiguriert ist:
- Anweisen (492) einer Steuerung (140) des Motors Pⱼ, Schub von Motor Pⱼ bei einem ersten Schubwert zu erhöhen, wobei sich der erste Schubwert von dem Schubbefehl unterscheidet; und
- nach einer Stabilisierungsphase, Anweisen (494), dass die Steuerung (140) des Motors Pⱼ Schub des Motors Pⱼ bei einem zweiten Schubwert einstellt, der im Wesentlichen mit dem Schubbefehl übereinstimmt.

5. System nach einem der Ansprüche 1 bis 4, umfassend für jeden Motor eine Schnittstelle (180), umfassend:
- eine Sicherheitshandlungsposition (185), die bei Aktivierung konfiguriert ist, um eine Sicherheitshandlung zum Handhaben eines Fehlers, der in dem Motor vorhanden ist, auszulösen,
- eine Startposition (182), die bei Aktivierung konfiguriert ist, um den Motor zu starten, und
- eine Abschalt- (183) oder Notposition (184), die bei Aktivierung den Motor teilweise oder vollständig abschaltet.

6. System nach einem der Ansprüche 1 bis 5, umfassend eine Schnittstelle (190), die bedienbar ist, um Daten mit der gemeinsamen Steuereinheit (130) zu kommunizieren und Eingeben eines Befehls zu ermöglichen, der repräsentativ für eine Krümmung einer Flugbahn des Flugzeugs am Boden ist.

7. System nach Anspruch 6, wobei nach Eingabe eines Befehls durch die Schnittstelle (190) die gemeinsame Steuereinheit (130) konfiguriert ist, um Folgendes zu erzeugen:
- zumindest einen ersten Befehl, der durch eine Steuerung (140) von zumindest einem rechten Motor verwendbar ist, um Schub des zumindest einen rechten Motors in Übereinstimmung mit dem ersten Befehl zu steuern, und
- zumindest einen Schubbefehl, der durch eine Steuerung (140) von zumindest einem linken Motor verwendbar ist, um Schub des zumindest einen linken Motors in Übereinstimmung mit dem zweiten Befehl zu steuern,
wobei Schub des zumindest einen rechten Motors und Schub des zumindest einen linken Motors ausgewählt sind, um das Flugzeug dazu zu bringen, einer gekrümmten Flugbahn zu folgen, welche die Krümmung befolgt.

8. System zum Steuern einer Vielzahl von Motoren (101) eines Flugzeugs, wobei die Vielzahl von Motoren zumindest einen rechten Motor und zumindest einen linken Motor umfasst, wobei das System **dadurch gekennzeichnet ist, dass** es Folgendes umfasst:
- eine einzelne Schnittstelle (110, 190, 600), die durch einen Piloten bedienbar ist, um einen einzelnen Krümmungsbefehl bereitzustellen, der repräsentativ für eine Krümmung einer Flugbahn des Flugzeugs am Boden ist,
- eine gemeinsame Steuereinheit (130), die zu Folgendem konfiguriert ist:
o Erzeugen von zumindest einem ersten Befehl, der durch zumindest eine Steuerung (140) des zumindest einen rechten Motors verwendbar ist, um Schub des zumindest einen rechten Motors basierend zumindest auf dem ersten Befehl zu steuern, und
o Erzeugen von zumindest einem zweiten Befehl, der durch zumindest eine Steuerung (140) des zumindest einen linken Motors verwendbar ist, um Schub des zumindest einen linken Motors basierend zumindest auf dem zumindest einen zweiten Befehl zu steuern,
wobei der erste Befehl und der zweite Befehl ausgewählt sind, sodass Schub des zumindest einen rechten Motors und Schub des zumindest einen linken Motors dem Flugzeug ermöglichen, einer gekrümmten Flugbahn zu folgen, die repräsentativ für den einzelnen Krümmungsbefehl ist, der an der Schnittstelle bereitgestellt ist.

9. Verfahren zum Steuern einer Vielzahl von Motoren eines Flugzeugs, wobei die Vielzahl von Motoren zumindest einen ersten Motor des Flugzeugs und zumindest einen zweiten Motor des Flugzeugs umfasst, wobei das Verfahren Folgendes umfasst:
- Erhalten (200, 300, 405) von Daten, die repräsentativ für einen Schubbefehl für die Vielzahl von Motoren sind, übertragen durch zumindest:
(i) ein einzelnes Betätigungselement (110), das bedienbar ist, um Schub von allen aus der Vielzahl von Motoren (101) des Flugzeugs zu steuern, wobei das Betätigungselement durch einen Piloten oder durch eine automatische Drosselung des Flugzeugs steuerbar ist, oder
(ii) zumindest eines von einem einzelnen Betätigungselement, das bedienbar ist, um positiven Schub von allen aus der Vielzahl von Motoren (101) des Flugzeugs zu steuern, wobei das Betätigungselement durch einen Piloten steuerbar ist, und einem einzelnen Betätigungselement, das bedienbar ist, um negativen Schub von allen aus der Vielzahl von Motoren des Flugzeugs zu steuern, wobei das Betätigungselement durch einen Piloten steuerbar ist,
- Bedienen einer Umwandlung (210), durch eine gemeinsame Steuereinheit (130), der Daten, die repräsentativ für den Schubbefehl sind, in:
o zumindest einen ersten Befehl, der durch eine Steuerung (140) des zumindest einen ersten Motors (101) verwendbar ist, um Bedienung des zumindest einen ersten Motors basierend zumindest auf dem ersten Befehl zu steuern, und
o zumindest einen zweiten Befehl, der durch eine Steuerung (140) des zumindest einen zweiten Motors (101) verwendbar ist, um Bedienung des zumindest einen zweiten Motors basierend zumindest auf dem zweiten Befehl zu steuern,
wobei die Umwandlung basierend zumindest auf Daten durchgeführt wird, die repräsentativ für ein Niveau an Bedienbarkeit von jedem von dem zumindest einen ersten und zweiten Motor (101) sind, das während Bedienung des Flugzeugs bestimmt wird, wodurch jeder von dem zumindest ersten und zweiten Motor dazu gebracht wird, entweder den Schubbefehl zu befolgen oder anders als der Schubbefehl bedient zu werden, basierend zumindest auf seinem Niveau an Bedienbarkeit während Bedienung des Flugzeugs,
wobei das Verfahren ferner Folgendes umfasst:
- Empfangen (301, 455) von Daten, die repräsentativ für eine Fehlfunktion und/oder einen Ausfall eines gegebenen Motors von dem zumindest ersten und zweiten Motor sind, und
o Erzeugen (302, 706) eines Befehls, der durch die Steuerung (140) des Motors, der sich von dem gegebenen Motor unterscheidet, verwendbar ist, um Schub des Motors zu steuern, wobei der Schub gemäß den Daten gesteuert wird, die repräsentativ für den Schubbefehl sind, der durch die gemeinsame Steuereinheit empfangen wird, oder
o Anweisen (303, 460, 701), durch die gemeinsame Steuereinheit (130), der Steuerung (140) des gegebenen Motors, Schub des gegebenen Motors bei einem ersten Schubwert zu reduzieren, wobei der erste Schubwert niedriger als der Schubbefehl ist.

10. Verfahren nach Anspruch 9, wobei zumindest eines von (i) und (ii) erfüllt ist:
(i) die Daten, die repräsentativ für den Schubbefehl sind, beinhalten einen einzelnen Schubbefehl für alle aus der Vielzahl von Motoren (101) des Flugzeugs;
(ii) der erste Befehl und der zweite Befehl stimmen jeweils im Wesentlichen mit dem Schubbefehl überein.

11. Verfahren zum Steuern einer Vielzahl von Motoren eines Flugzeugs, wobei die Vielzahl von Motoren zumindest einen rechten Motor und zumindest einen linken Motor umfasst, wobei das Verfahren Folgendes umfasst:
- Erhalten, von einer einzelnen Schnittstelle (110, 190, 600), die durch einen Piloten bedienbar ist, eines einzelnen Krümmungsbefehls, der repräsentativ für eine Krümmung einer Flugbahn des Flugzeugs am Boden ist,
- basierend auf dem einzelnen Krümmungsbefehl, Erzeugen, durch eine gemeinsame Steuereinheit (130),
o von zumindest einem ersten Befehl, der durch zumindest eine Steuerung (140) des zumindest einen rechten Motors verwendbar ist, um Schub des zumindest einen rechten Motors basierend zumindest auf dem ersten Befehl zu steuern, und
o von zumindest einem zweiten Befehl, der durch zumindest eine Steuerung (140) des zumindest einen linken Motors verwendbar ist, um Schub des zumindest einen linken Motors basierend zumindest auf dem zumindest einen zweiten Befehl zu steuern,
wobei der erste Befehl und der zweite Befehl ausgewählt sind, sodass Schub des zumindest einen rechten Motors und Schub des zumindest einen linken Motors dem Flugzeug ermöglichen, einer gekrümmten Flugbahn zu folgen, die repräsentativ für den einzelnen Krümmungsbefehl ist.

12. Nichtflüchtige Speichervorrichtung, die durch eine Maschine lesbar ist, die greifbar ein Programm mit Anweisungen verkörpert, das durch die Maschine ausführbar ist, um das Verfahren nach Anspruch 9 oder Anspruch 11 durchzuführen.

## Revendications

1. Système (100) destiné à commander une pluralité de moteurs (101) d'un aéronef, ladite pluralité de moteurs (101) comprenant au moins un premier moteur de l'aéronef et au moins un second moteur de l'aéronef, le système comprenant :
une unité de commande commune (130) configurée pour opérer une conversion de données représentatives d'une
instruction de poussée (120) transmise par au moins :
(i) un élément d'actionnement unique (110) servant à commander la poussée de l'ensemble de la pluralité de moteurs
de l'aéronef, ledit élément d'actionnement étant commandable
par un pilote ou par une automanette de l'aéronef, ou
(ii) au moins l'un d'un élément d'actionnement unique servant à commander la poussée positive de l'ensemble de la pluralité de moteurs
de l'aéronef, ledit élément d'actionnement
étant commandable par un pilote, et un élément d'actionnement unique servant à commander la poussée négative de l'ensemble de la pluralité de
moteurs de l'aéronef,
ledit élément d'actionnement étant commandable par un pilote, en :
**(a)** au moins une première instruction utilisable par un dispositif de commande (140) dudit au moins un premier moteur pour commander le fonctionnement dudit au moins un premier moteur sur la base au moins de ladite première instruction, et
**(b)** au moins une seconde instruction utilisable par un dispositif de commande (140) dudit au moins un second moteur pour commander le fonctionnement dudit au moins un moteur gauche sur la base au moins de ladite seconde instruction,
le système étant **caractérisé en ce que**,
ladite unité de commande commune (130) sert à réaliser ladite conversion sur la base au moins de données représentatives d'un niveau d'opérabilité de chacun des au moins un premier et un second moteurs (101) déterminés
durant le fonctionnement de l'aéronef,
amenant ainsi chacun des au moins un premier et un second
moteurs (101) à se conformer à ladite instruction de poussée ou
à fonctionner différemment de ladite instruction de poussée, sur la base au moins de son niveau d'opérabilité durant le fonctionnement de l'aéronef,
lorsque l'unité de commande commune (130) reçoit des données représentatives d'un dysfonctionnement et/ou d'une panne d'un moteur donné parmi les au moins un premier et un second moteurs, ladite
unité de commande commune (130) étant configurée pour :
- générer (302, 706) une instruction utilisable par le dispositif de commande (140) du moteur différent du moteur donné pour
commander la poussée dudit moteur,
ladite poussée étant commandée conformément auxdites données représentatives de l'instruction de poussée reçue par ladite unité de commande commune (130), ou
- fournir des instructions (303, 460, 701) au
dispositif de commande (140) du moteur donné pour réduire la poussée du moteur donné à une première valeur de poussée, ladite première valeur de poussée étant inférieure à ladite instruction de poussée.

2. Système de la revendication 1, au moins l'un de (i) et (ii) étant satisfait :
(i) lesdites données représentatives de l'instruction de poussée comprenant une instruction unique de poussée pour l'ensemble de la pluralité de moteurs de l'aéronef ;
(ii) ladite première instruction et ladite seconde instruction correspondant chacune sensiblement à ladite instruction de poussée.

3. Système de la revendication 1, configuré pour générer (304) une instruction pour commander une position d'un actionneur de lacet (420) de l'aéronef, pour compenser une dérive de lacet (410) entraînée par une panne du au moins un moteur donné.

4. Système de l'une quelconque des revendications 1 à 3, ladite pluralité de moteurs comprenant des moteurs P₁ à P_{N}, avec N≥2, ladite unité de commande commune (130) étant configurée pour, lors de la réception d'une instruction ordonnant de mettre en marche le moteur Pⱼ :
- fournir des instructions (492) à un dispositif de commande (140) dudit moteur Pⱼ pour augmenter la poussée du moteur Pⱼ à une première valeur de poussée, ladite première valeur de poussée étant différente de l'instruction de poussée ; et
- après une période de stabilisation, fournir des instructions (494) audit dispositif de commande (140) dudit moteur Pⱼ pour régler la poussée du moteur Pⱼ à une seconde valeur de poussée qui correspond sensiblement à ladite instruction de poussée.

5. Système de l'une quelconque des revendications 1 à 4, comprenant, pour chaque moteur, une interface (180) comprenant :
- une position d'action de sécurité (185), qui, lors de son activation, est configurée pour déclencher une action de sécurité destinée à gérer une panne présente dans ledit moteur,
- une position de démarrage (182), qui, lors de son activation, est configurée pour démarrer ledit moteur, et - une position de coupure (183) ou d'urgence (184), qui, lors de son activation, éteint partiellement ou totalement ledit moteur.

6. Système de l'une quelconque des revendications 1 à 5, comprenant une interface (190) servant à communiquer des données avec l'unité de commande commune (130) et permettant d'entrer une instruction représentative d'une courbure d'une trajectoire de l'aéronef au sol.

7. Système de la revendication 6, lors de l'entrée d'une instruction par l'intermédiaire de ladite interface (190), ladite unité de commande commune (130) étant configurée pour générer :
- au moins une première instruction utilisable par un dispositif de commande (140) d'au moins un moteur droit pour commander la poussée dudit au moins un moteur droit conformément à ladite première instruction, et
- au moins une instruction de poussée utilisable par un dispositif de commande (140) d'au moins un moteur gauche pour commander la poussée dudit au moins un moteur gauche conformément à ladite seconde instruction,
ladite poussée dudit au moins un moteur droit et ladite poussée dudit au moins un moteur gauche étant choisies pour amener l'aéronef à suivre une trajectoire courbe qui respecte ladite courbure.

8. Système destiné à commander une pluralité de moteurs (101) d'un aéronef, ladite pluralité de moteurs comprenant au moins un moteur droit et au moins un moteur gauche, le système étant **caractérisé en ce qu'**il comprend :
- une interface unique (110, 190, 600) pouvant être utilisée par un pilote pour fournir une instruction de courbure unique représentative d'une courbure d'une trajectoire de l'aéronef au sol,
- une unité de commande commune (130) configurée pour :
o générer au moins une première instruction utilisable par au moins un dispositif de commande (140) dudit au moins un moteur droit pour commander la poussée dudit au moins un moteur droit sur la base au moins de ladite première instruction, et
o générer au moins une seconde instruction utilisable par au moins un dispositif de commande (140) dudit au moins un moteur gauche pour commander la poussée dudit au moins un moteur gauche sur la base au moins de ladite au moins une seconde instruction,
ladite première instruction de courbure unique et ladite seconde instruction étant choisies de sorte que la poussée dudit au moins un moteur droit et la poussée dudit au moins un moteur gauche permettent à l'aéronef de suivre une trajectoire courbe représentative de ladite instruction de courbure unique prévue sur ladite interface.

9. Procédé de commande d'une pluralité de moteurs d'un aéronef, ladite pluralité de moteurs comprenant au moins un premier moteur de l'aéronef et au moins un second moteur de l'aéronef, le procédé comprenant :
- l'obtention (200, 300, 405) de données représentatives d'une instruction de poussée pour ladite pluralité de moteurs, transmises par au moins :
(i) un élément d'actionnement unique (110) servant à commander la poussée de l'ensemble de la pluralité de moteurs
(101) de l'aéronef, ledit élément d'actionnement étant commandable par un pilote ou par une automanette de l'aéronef, ou
(ii) au moins l'un d'un élément d'actionnement unique servant à commander la poussée positive de l'ensemble de la pluralité de
moteurs (101) de l'aéronef, ledit élément d'actionnement étant commandable par un pilote, et d'un élément d'actionnement unique servant à commander la poussée négative de l'ensemble de la pluralité de
moteurs de l'aéronef, ledit élément d'actionnement étant commandable par un pilote,
- le fonctionnement d'une conversion
(210), par une unité de commande commune (130), desdites données représentatives de l'instruction de poussée en :
o au moins une première instruction utilisable par un dispositif de commande (140) dudit au moins un premier moteur (101) pour commander le fonctionnement dudit au moins un premier moteur sur la base au moins de ladite première instruction, et
o au moins une seconde instruction utilisable par un dispositif de commande (140) dudit au moins un second moteur (101) pour commander le fonctionnement dudit au moins un second moteur sur la base au moins de ladite seconde instruction,
ladite conversion étant réalisée sur la base au moins des données représentatives d'un niveau d'opérabilité de chacun des premier et second moteurs (101) déterminé durant le fonctionnement de l'aéronef,
amenant ainsi chacun des au moins un premier et un second moteurs
à se conformer à ladite instruction de poussée, ou à
fonctionner différemment de ladite instruction de poussée, sur la base au moins de son niveau d'opérabilité lors du fonctionnement de l'aéronef, ledit procédé comprenant en outre :
- la réception (301, 455) de données représentatives d'un dysfonctionnement et/ou d'une panne d'un moteur donné des au moins un premier et un second moteurs, et
o la génération (302, 706) d'une instruction utilisable par le dispositif de commande (140) du moteur différent du moteur donné pour commander la poussée dudit moteur,
ladite poussée étant commandée conformément auxdites données représentatives de l'instruction de poussée reçue par ladite unité de commande commune, ou
o la fourniture d'instructions (303, 460, 701), par l'unité de commande commune (130), au dispositif de commande (140) du moteur donné pour réduire la poussée du moteur donné à une première valeur de poussée, ladite première valeur de poussée étant inférieure à ladite instruction de poussée.

10. Procédé de la revendication 9, au moins l'un de (i) et (ii) étant satisfait :
(i) lesdites données représentatives de l'instruction de poussée comprenant une instruction de poussée unique pour l'ensemble de la pluralité de moteurs (101) de l'aéronef ;
(ii) ladite première instruction et ladite seconde instruction correspondant chacune sensiblement à ladite instruction de poussée.

11. Procédé de commande d'une pluralité de moteurs d'un aéronef, ladite pluralité de moteurs comprenant au moins un moteur droit et au moins un moteur gauche, le procédé comprenant :
- l'obtention, à partir d'une interface unique (110, 190, 600) pouvant être utilisée par un pilote, d'une instruction de courbure unique représentative d'une courbure d'une trajectoire de l'aéronef au sol,
- sur la base de ladite instruction de courbure unique, la génération, par une unité de commande commune (130),
o d'au moins une première instruction utilisable par au moins un dispositif de commande (140) dudit au moins un moteur droit pour commander la poussée dudit au moins un moteur droit sur la base au moins de ladite première instruction, et
o au moins une seconde instruction utilisable par au moins un dispositif de commande (140) dudit au moins un moteur gauche pour commander la poussée dudit au moins un moteur gauche sur la base au moins de ladite au moins une seconde instruction,
ladite première instruction et ladite seconde instruction étant choisies de sorte que la poussée dudit au moins un moteur droit et la poussée dudit au moins un moteur gauche permettent à l'aéronef de suivre une trajectoire courbe représentative de ladite instruction de courbure unique.

12. Dispositif de stockage non transitoire lisible par une machine, comportant de manière tangible un programme d'instructions exécutables par la machine pour réaliser le procédé de la revendication 9 ou de la revendication 11.
